# EUROPEAN PATENT APPLICATION

(11) **EP 1 826 428 A1**
(43) Date of publication of application: **29.08.2007**
(21) Application number: 06003859.3
(22) Date of filing: 24.02.2006
(51) Int. Cl.: F16D 7/02

(54) **Torque release mechanism for all terrain vehicles**

(71) Applicant: Kwang Yang Motor Co., Ltd., San-Min Dist., Kaohsiung City (TW)
(72) Inventor: Lee, Ying Che, 48 Regent Street Cambridge CB2 1FD (GB); Shao, Chien-Neng, 48 Regent Street Cambridge CB2 1FD (GB)
(74) Representative: Horak, Michael

(57) **Abstract**

A torque release mechanism for all terrain vehicles which includes a driving disc fixedly mounted on a rear axle of the all terrain vehicle and having one side provided with a circular flange and a tubular portion, a friction plate put over the circular flange, a sprocket put over the flange, a fixing plate put over the flange, a resilient member put over the tubular portion and in contact, and a fastening member fixedly engaged with the tubular portion to force the resilient member against the fixing plate, whereby when the sprocket is subject to a heavy weight or a large torque which exceeds the frictional force produced by the friction plate, the sprocket will be rotated independently and will not drive the driving disc via the friction plate thereby reducing loading to the chain and the sprocket and therefore protecting the chain and the sprocket from being damaged.

## Description

### BACKGROUND OF THE INVENTION

### (a) Field of the Invention

This invention is related to a torque release mechanism for all terrain vehicles and in particular to one comprising a driving disc, a sprocket, at least a friction disc, fixing disc and a resilient member and utilizing the friction of the friction disc to provide a torque release mechanism for all terrain vehicles thereby protecting a transmission chain of all terrain vehicles from being broken when the torque applied to the chain exceeds a predetermined value.

### (b) Description of the Prior Art

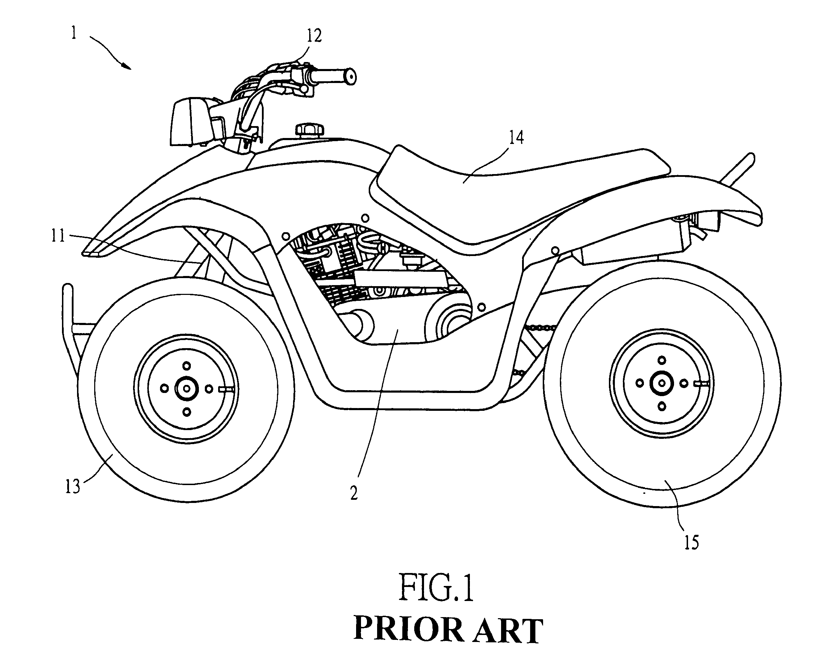

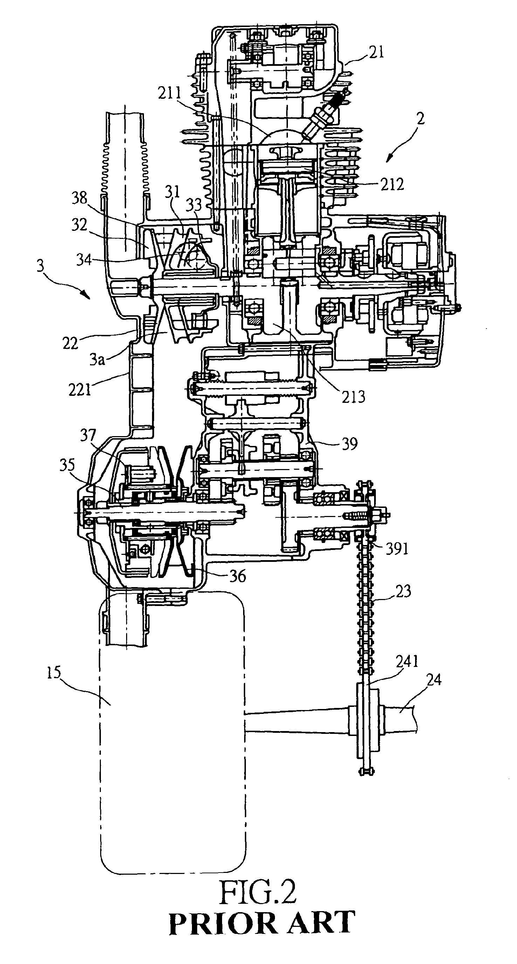

Referring to FIG 1, the conventional all terrain vehicle 1 generally includes a frame 11, a steering mechanism 12, two front wheels 13, a seat 14, two rear wheels 15, and a power unit 2. The front portion of the frame 11 is pivotally connected with the steering mechanism 12 under which are mounted the front wheels 13. The seat 4 is arranged behind the steering mechanism 12 and mounted on the frame 11. The power unit 2 is installed under the seat 14. As illustrated in FIG 2, the power unit 2 includes an engine 21 and a stepless transmission 22 driven by the engine 21 and driving a rear axle 24 via a chain 23. The rear wheels 15 are drivingly connected with the rear axle 24.

As shown in FIG 2, the fuel is first mixed with fresh air and then transmitted to a combustion chamber 211 of the engine 21 to generate power thereby causing a piston 212 to reciprocate and therefore rotating a crankshaft 213. Then, the crankshaft 213 will drive the stepless transmission 22.

The stepless transmission 22 includes a belt transmission 3 arranged in a transmission case 221. The belt transmission 3 includes a movable disc 31 mounted on the crankshaft 213, a driving disc 32 arranged on the crankshaft and mounted on one side of the movable disc 31, an inclined plate 33 mounted on the crankshaft 213 and arranged the other side of the movable disc 31, a plurality of rolling balls 34 fitted between the movable disc 31 and the inclined plate 33, a driven shaft 35 for power transmission, driven discs 36 arranged on the driven shaft 35, a clutch 37 mounted on the driven shaft 35, a belt 38, a final gear set 39, and a final sprocket 391. The movable disc 31 and the driving disc 32 form a driving disc 3a of a belt transmission mechanism 3. The belt 38 has an end between the movable disc 31 and the driving disc 32 and the other end between the driven discs 36.

The engine 21 utilizes the power generated from the explosion to reciprocate the piston 212 thereby rotating the crankshaft 213. The driving disc 3a of the stepless transmission 22 will be rotated in unison with the crankshaft 213 thereby rotating the driven disc 36 to drive the driven shaft 35 via the clutch 37. The final gear set 39 will drive the final sprocket 391 which will in turn drive a driving toothed disc 241 on the rear axle 241 via the chain 23 thus turning the rear wheels to cause the all terrain vehicle to travel.

In order for the terrain vehicle 1 to accelerate forward or upwards at the moment of impact as it touches ground, the accelerator must be fully pressed to further increase the performance of the output torque of the engine. Due to the gravitational force and the function of the shock absorber, the chain 23 between the sprocket 391 and the driving toothed disc 241 will be in a tensioned condition. Furthermore, the engine will output larger power and torque when the accelerator is pressed, the chain 23 and the driving toothed disc 241 will be subject to a large torque thus probably pulling the chain 23 away the driving toothed disc 241. As a consequence, the chain 23 and the driving toothed disc will even be broken or damaged thereby seriously influencing the safety of the all terrain vehicle.

### SUMMARY OF THE INVENTION

This invention is directed to a torque release mechanism for all terrain vehicles.

It is the primary object of the present invention to provide a torque release mechanism for all terrain vehicles which includes a driving disc fixedly mounted on a rear axle of the all terrain vehicle and having one side provided with a circular flange and a tubular portion, a friction plate put over the circular flange, a sprocket put over the flange, a fixing plate put over the flange, a resilient member put over the tubular portion and in contact, and a fastening member fixedly engaged with the tubular portion to force the resilient member against the fixing plate, whereby when the sprocket is subject to a heavy weight or a large torque which exceeds the frictional force produced by the friction plate, the sprocket will be rotated independently and will not drive the driving disc via the friction plate thereby reducing loading to the chain and the sprocket and therefore protecting the chain and the sprocket from being damaged.

It is another object of the present invention to provide a torque release mechanism for all terrain vehicles wherein the circular flange of the driving disc has an outer edge provided with a plurality of notches engaged with a plurality of protuberances said fixing plate and a friction plate is arranged between the driving disc and the fixing plate thereby enabling the driving disc to be rotated in unison with the sprocket.

It is still another object of the present invention to provide a torque release mechanism for all terrain vehicles wherein a resilient member is mounted at one side of the fixing plate so that even if the friction plate is worn, the resilient member can still force the fixing plate and the friction plate against the sprocket thereby assuring the all terrain vehicles to operate normally.

The foregoing objects and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a side view of a prior art all terrain vehicle;
FIG 2 is a sectional view of a prior art transmission mechanism for all terrain vehicles;
FIG 3 is a sectional view of a transmission mechanism for all terrain vehicles according to the present invention;
FIG 4 is an exploded view of the torque release mechanism of the transmission mechanism according to the present invention;
FIGS. 5 and 6 illustrate the working principle of the torque release mechanism according to the present invention.

### DETAILED DESCRIPTION OF THE PREFERRED EMBODIMENT

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

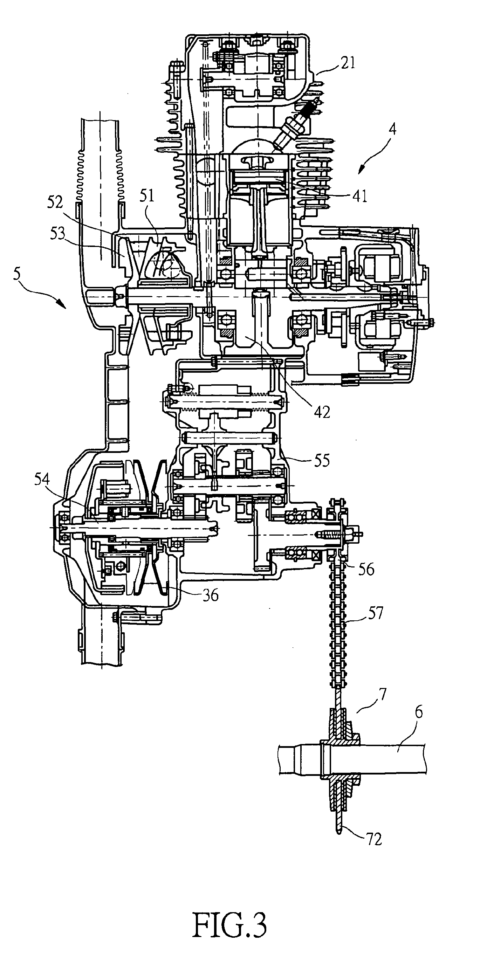

With reference to FIG 3, the transmission mechanism for all terrain vehicles according to the present invention mainly comprises an engine 4 and a stepless transmission 5.

The engine 4 utilizes the power generated by explosion to push a piston 41 to reciprocate, thereby driving a crankshaft 42 to rotate. Then, the crankshaft 42 will drive the stepless transmission 5 to rotate a driving disc 51 which will in turn drive a driven disc 53 via a belt 52. In the meantime, the driven disc 53 will drive a driven axle 54 which will in turn drive a final toothed disc 56 via a final gear set 55. The final toothed disc 56 will drive a sprocket 72 via a chain 6 engaged with a rear axle 7.

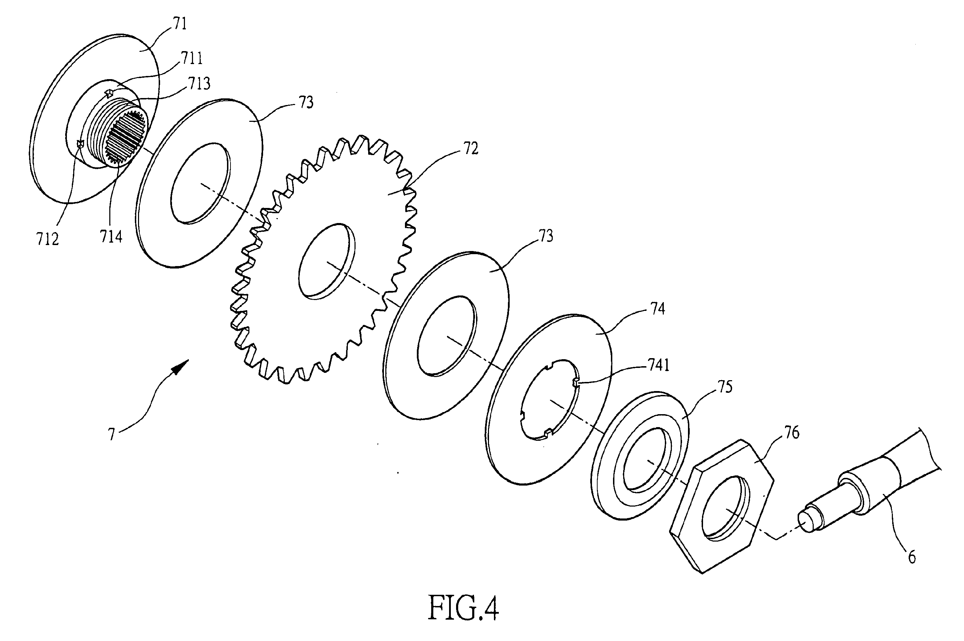

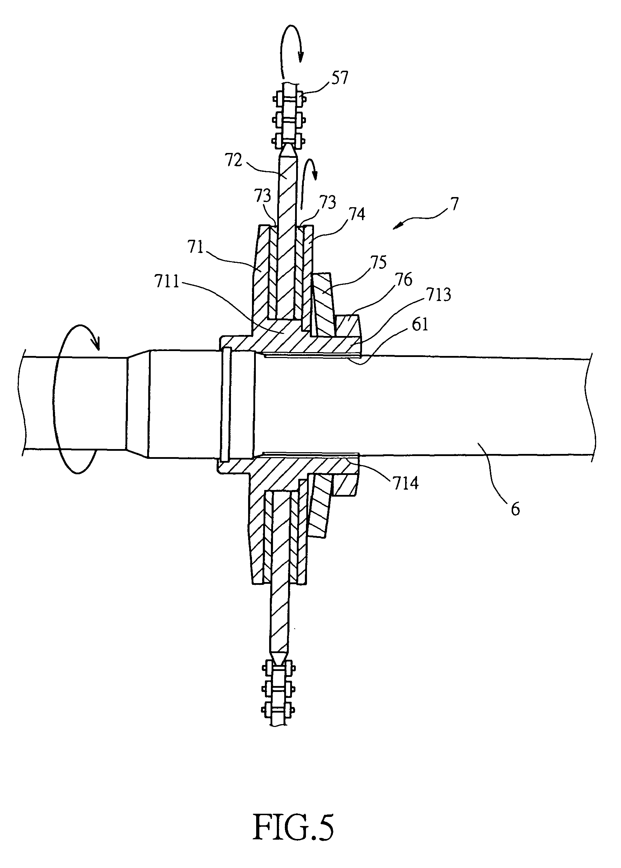

Referring to FIGS. 4 and 5, the torque release mechanism 7 according to the present invention comprises a driving disc 71, a sprocket 72, two friction plates 73, a fixing plate 74, a resilient member 75 and a locking member 76.

The driving disc 71 is provided at one side with a circular flange 711 which has a plurality of notches 712 at the outer edge. An externally threaded tubular portion 713 extends from the circular flange 711 and has a smaller diameter than the circular flange 711. A center hole with a plurality of internal splines 714 extends through the externally threaded tubular portion 713, the circular flange 711 and the driving disc 71. The rear axle 6 is provided with splines 61 adapted to fit the internal splines 714 of the driving disc 71 so that the rear axle 6 will be rotated in unison with the driving disc 71 (see FIG 5).

The sprocket 72 is put over the circular flange 711 of the driving disc 71.

The friction plates 73 are put over circular flange 711 of the driving disc 71 so that the sprocket 72 is sandwiched between the two friction plates 73.

The fixing plate 74 has a center hole provided with a plurality of protuberances 741 configured and positioned to engage with the notches 712 of the circular flange 711, so that the fixing plate 74 will be rotated in unison with the driving disc 71.

The resilient member 75, which is shaped as a disc in this preferred embodiment, is put over the externally threaded tubular portion 713 of the driving disc 71 and kept in place by the fastening member 76 which is threadedly engaged with the externally threaded tubular portion 713.

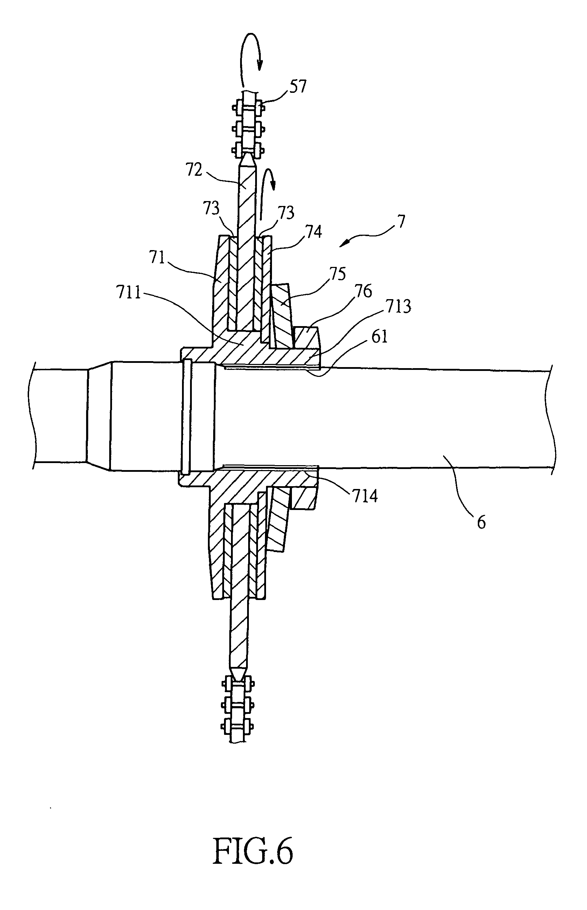

As can be seen in FIGS. 5 and 6, the first friction plate 73, the sprocket 72, the second friction plate 73 and the fixing plate 74 are put over the circular flange 711 in sequence. Then, the resilient member 75 is put over the tubular portion 713 and the locking member 76 is engaged with the external threads of the tubular portion 713 to force the resilient member 75 against the fixing plate 74 thereby pressing the second friction plate 731, the sprocket 72, the first friction plate 731 and the driving disc 71 together. Hence, when the sprocket 72 is driven by the final toothed disc 56 via the chain 57, the friction plates 73 and 731 will be rotated by the sprocket 72 and the fixing plate 74 and the driving disc 71 will be also driven to rotate in unison with the friction plates 73 and 731. As a consequence, the driving disc 71 will be rotated with the sprocket 72 simultaneously thus driving the vehicle to go.

The frictional force produced by the friction plates 73 and 731 is set to be within the maximum loading that can be bom by the chain 57 and the sprocket 72. When the terrain vehicle is thrown up and down and accelerated to increase the performance of the engine as it touches the ground, the engine 4 and the stepless transmission 5 will output a large power and torque which will be transmitted to the final toothed disc 56 which will in turn drive the sprocket 72 via the chain 6. Referring to FIG 6, when the sprocket 72 is subject to a heavy weight or a large torque which exceeds the frictional force produced by the friction plates 73 and 731, the sprocket 72 will be rotated independently and will not drive the driving disc 71 via the friction plates 73 and 731 thereby reducing loading to the chain 57 and the sprocket 72 and therefore protecting the chain 57 and the sprocket 72 from being damaged.

When the load or torque is reduced below the frictional force produced by the friction plates 73 and 731, the sprocket 72 will again drive the friction plates 73 and 731 which will in turn drive the fixing plate 74 and the driving disc 71 thereby making the sprocket 72 and the driving disc 71 rotate simultaneously.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A torque release mechanism for an all terrain vehicle comprising:
a driving disc fixedly mounted on a rear axle of said all terrain vehicle and having one side provided with a circular flange and a tubular portion;
a friction plate put over said circular flange;
a sprocket put over said flange and in contact with said friction plate;
a fixing plate put over said flange and in contact with said sprocket;
a resilient member put over said tubular portion and in contact; and
a fastening member fixedly engaged with said tubular portion to force said resilient member against said fixing plate.

2. The torque release mechanism for an all terrain vehicle as claimed in claim 1, further comprising a second friction plate put over said circular flange and disposed between said sprocket and said fixing plate.

3. The torque release mechanism for an all terrain vehicle as claimed in claim 1, wherein said tubular portion has a smaller diameter than said circular flange.

4. The torque release mechanism for an all terrain vehicle as claimed in claim 1, wherein said circular flange has an outer edge provided with a plurality of notches.

5. The torque release mechanism for an all terrain vehicle as claimed in claim 1, wherein said tubular portion is provided with a plurality of internal splines.

6. The torque release mechanism for an all terrain vehicle as claimed in claim 4, wherein said fixing plate is provided with a plurality of protuberances configured and positioned to engage with said notches.
